# FASCICULE DE BREVET EUROPEEN

(11) **EP 1 714 300 B1**
(45) Date de publication et mention de la délivrance du brevet: **28.10.2009**
(21) Numéro de dépôt: 04805818.4
(22) Date de dépôt: 09.11.2004
(51) Int. Cl.: H01J 49/04, B05B 5/025

(54) **DISPOSITIF MICROFLUIDIQUE MUNI D'UN NEZ D'ELECTRONEBULISATION**
MIKROFLUIDISCHE EINRICHTUNG MIT EINER ELEKTROSPRAY-NASE
MICROFLUIDIC DEVICE COMPRISING AN ELECTROSPRAY NOSE

(30) Priorité: 12.11.2003 FR 0350821
(43) Date de publication de la demande: 25.10.2006
(73) Titulaire: COMMISSARIAT A L'ENERGIE ATOMIQUE, 75015 Paris (FR); UNIVERSITE DES SCIENCES ET TECHNOLOGIES DE LILLE, 59655 Villeneuve d'Ascq Cedex (FR)
(72) Inventeur: SARRUT, Nicolas, F-38170 Seyssinet (FR)
(74) Mandataire: Poulin, Gérard
(86) Numéro de dépôt international: PCT/FR2004/050575
(87) Numéro de publication internationale: WO 2005/048291

(56) Documents cités:
- WO-A-98/35376
- DE-A- 10 000 691
- US-A- 5 788 166
- US-A1- 2003 082 080
- US-B1- 6 481 648

## Description

### DOMAINE TECHNIQUE

La présente invention concerne un dispositif microfluidique muni d'un nez d'électronébulisation. Ce type de dispositif est destiné en particulier à l'obtention de laboratoires sur puce (en anglais "lab-on-chip"). Il est notamment utilisé dans le domaine de la spectrométrie de masse.

### ETAT DE LA TECHNIQUE ANTERIEURE

Depuis bientôt dix ans, différents travaux portant sur le couplage de puces microfluidiques (ou laboratoires sur puces) à la spectrométrie de masse ont été présentés. D'une part, cette méthode de détection à haute sensibilité permet d'obtenir des informations sur la nature des échantillons analysés (rapport masse/charge), d'autres part elle permet d'analyser des mélanges complexes de molécules, pour peu qu'elles aient été séparées et concentrées en amont de l'analyse. Ainsi, une idée exploitée est de mettre à profit les progrès récents réalisés en microfluidique pour intégrer les traitements d'échantillons (séparation, concentration...) nécessaires à l'analyse par spectrométrie de masse.

Le couplage microfluidique / spectrométrie de masse repose le plus souvent sur une technique d'ionisation de l'échantillon par électronébulisation ou ESI (d'après l'expression anglaise "ElectroSpray Ionization"). Sous l'action d'un champ électrique intense, l'échantillon présent sous forme liquide au cours des prétraitements est nébulisé en un gaz d'ions ou en une multitudes de gouttelettes chargées entrant dans le spectromètre de masse pour analyse.

Différentes approches de couplage ont déjà été proposées.

Dès 1997, R.S. RAMSEY et al., dans l'article "Generating ElectroSpray from Microchip Devices Using Electroosmotic Pumping" (Anal. Chem., 1997, 69, pages 1174-1178) ont proposé une puce microfluidique en verre dont les flux de liquide sont gérés par électroosmose et dont le canal de sortie débouche dans la tranche du composant à géométrie plane. Sous l'assistance d'une surpression, il se forme en sortie de puce une goutte d'échantillon de 12 nl, qui, sous l'action d'un champ électrique intense, forme un cône de Taylor en se nébulisant. Cette approche, certes simple, pose le problème d'un volume mort de liquide important (12 nl), ce qui impose une limite de sensibilité à la détection.

Plus récemment, K. HUIKKO et al., dans l'article "Poly(diméthylsiloxane) electrospray devices fabricated with diamond-like carbon-poly (dimethylsiloxane) coated SU-8 masters" (Lab Chip, 2003; 3, pages 67-72 ont proposé une puce en poly(diméthylsiloxane) (PDMS) présentant elle aussi des canaux débouchants destinés à être mis en regard d'un spectromètre de masse pour nébulisation de l'échantillon. Les auteurs tirent profit de l'hydrophobie du PDMS pour l'obtention d'un petit cône de Taylor (limitation du volume mort), mais la technologie PDMS reste une technologie limitée qui ne permet pas encore la conception de réseaux microfluidiques complexes et de taille caractéristique de l'ordre du micromètre. Ceci impose une forte limitation quant au dessin des entités microfluidiques nécessaires aux prétraitements d'échantillons (concentration, séparation...).

Dans cette même filière technologique qu'est l'utilisation de matériaux polymères, M. SVEDERBERG et al., dans l'article "Sheathless Electrospray from Polymer Microchips" (Anal. Chem., 2003, 75, pages 3934-3940), ainsi que V. GOBRY et al., dans l'article "Microfabricated polymer injector for direct mass spectrometry coupling" (Proteomics 2002, 2, pages 405-412) ont proposé l'intégration sur puce de nez d'électronébulisation à géométrie bidimensionnelle ou tridimensionnelle adaptés à la stabilité du cône de Taylor, limitant les volumes morts et intégrant une électrode de sortie nécessaire à la formation de la nébulisation. Les problèmes précédents demeurent.

Une autre approche consiste en l'adaptation de la sortie du canal de séparation pour permettre d'accueillir une interface du commerce dit "PicoTip". On peut se référer à ce sujet à l'article de Y. TACHIBANA et al., intitulé "Robust and simple interface for microchip electrophoresis-mass spectrometry (J. of Chromatography, 1011 (2003), pages 181-192). Cela passe par l'utilisation d'une pièce métallique et/ou plastique jouant un tôle de liaison dans l'assemblage des deux entités. Ce genre d'assemblage présente des volumes morts importants et ne résout pas le problème de l'utilisation des "PicoTips" du commerce présentant une mauvaise reproductibilité en dimensions et une grande fragilité à l'utilisation.

US-A-6 481 648 divulgue selon le préambule de la revendication un laboratoire sur puce équipé d'une pointe de pulvérisation de forme conique. Ce laboratoire sur puce comprend un support plan dont la face inférieure est associée à un élément de fermeture pour constituer un canal microfluidique. La pointe de pulvérisation est disposée sur la face supérieure du support et perpendiculairement au support. Un autre canal est prévu pour relier le canal microfluidique à l'extrémité de la.pointe.

Le document WO-A-98/35376 divulgue un dispositif à canal micro-usiné constitué à partir d'un substrat support. Une structure formant buse est formée sur le substrat support et possède un orifice d'entrée d'échantillon. Un tube capillaire fournit l'échantillon à la structure formant buse via ledit orifice d'entrée.

US-A-5 788 166 divulgue une source d'ionisation par électronébulisation. La source comprend une aiguille qui possède un canal interne, une pointe effilée et qui est revêtue d'un contact métallique. L'aiguille est alimentée par un tube capillaire.

Enfin, le brevet américain N° 6 464 866 divulgue un système d'analyse chimique fabriqué par microtechnologie, à partir de deux substrats de préférence en silicium, et comprenant un système de chromatographie liquide et un dispositif d'électronébulisation. Le mode de réalisation est très complexe et l'intégration d'une électrode de sortie semble encore un point incomplètement résolu.

### EXPOSÉ DE L' INVENTION

Comme les systèmes de l'art antérieur, l'invention propose un dispositif permettant de coupler la microfluidique à la spectrométrie de masse. D'un point de vue technique, la problématique est d'assembler un nez d'électronébulisation de conception originale, nez d'électronébulisation dit de type « plume », à une puce microfluidique (réseau de canaux, réservoirs, micro-réacteurs, micro-mélangeurs....) de géométrie plane.

Cet assemblage doit :
- respecter les conditions de fonctionnement du nez d'électronébulisation (de type plume) seul,
- assurer un bon raccordement fluidique entre les deux entités, c'est-à-dire avec un minimum de volume mort,
- intégrer une électrode permettant d'imposer un potentiel électrique au liquide au niveau du nez.

L'invention permet donc de réaliser un dispositif microfluidique équipé d'un nez d'électronébulisation en assemblant deux entités :
- un nez électronébulisation réalisé par les techniques de la microtechnologie (en particulier un nez de type « plume »),
- un dispositif microfluidique à géométrie plane.

En outre, l'assemblage munit le dispositif final d'une électrode faisant partie intégrale de l'entité obtenu et localisée à proximité de la jonction canal de sortie de puce / nez d'électronébulisation.

Suivant la mise en oeuvre choisie pour l'assemblage, l'entrée du nez d'électronébulisation et la sortie de la puce microfluidique seront adaptées pour faciliter l'assemblage et permettre le contact électrique entre l'électrode et le liquide d'une part, et minimiser les volumes morts d'autre part.

Par ailleurs, différentes méthodes simples pour imposer un potentiel électrique à cette électrode depuis « le monde extérieur » seront aussi décrites.

L'invention a donc pour objet un dispositif microfluidique comprenant une puce microfluidique assemblée à une structure d'électronébulisation, la puce microfluidique comprenant au moins un canal microfluidique débouchant par un orifice de sortie sur une zone de surface de la puce microfluidique, la structure d'électronébulisation comprenant au moins une pointe plate et mince, la pointe étant pourvue d'une fente capillaire qui aboutit à l'extrémité de la pointe pour former un orifice d'éjection d'un liquide à nébuliser, la structure d'électronébulisation étant disposée sur la zone de surface de la puce microfluidique de façon que ladite pointe soit en porte-à-faux par rapport à la puce microfluidique et de façon que l'orifice de sortie du canal microfluidique débouche sur la fente capillaire de la pointe, le dispositif microfluidique possédant également des moyens d'application d'une tension d'électronébulisation au liquide à nébuliser.

De préférence, la puce microfluidique est assemblée à la structure d'électronébulisation par de la colle.

Si la colle est électriquement conductrice, les moyens d'application d'une tension d'électronébulisation peuvent comprendre une couche de ladite colle qui s'étend jusqu'à la fente capillaire, au niveau de l'orifice de sortie du canal microfluidique pour constituer une électrode d'électronébulisation. Dans ce cas, les moyens d'application d'une tension d'électronébulisation peuvent comprendre une reprise de contact située sur la puce microfluidique, reliée électriquement à la couche de colle et permettant une liaison électrique vers l'extérieur.

La structure d'électronébulisation peut être solidaire d'un élément électriquement conducteur dont une partie est disposée en regard de la fente capillaire, au niveau de l'orifice de sortie du canal microfluidique, pour constituer une électrode d'électronébulisation. Elle peut posséder une rainure de contact formée transversalement dans ladite structure pour déboucher au niveau de l'orifice de sortie du canal microfluidique et exposer l'élément électriquement conducteur. Cet élément électriquement conducteur peut être un élément constitutif d'un substrat de fabrication de la structure d'électronébulisation.

Selon un autre mode de réalisation, la structure d'électronébulisation comprend un pied adapté pour être reçu dans un logement de la puce microfluidique. Le pied peut posséder une rainure, le pied et le logement étant prévus pour que la rainure serve de communication de fluide entre l'orifice de sortie du canal microfluidique, situé au fond du logement, et la fente capillaire.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels:
- la figure 1 est une vue en perspective d'une structure d'électronébulisation utilisée par le dispositif microfluidique selon la présente invention,
- les figures 2A et 2B sont des vues, respectivement de côté et de dessus, d'un dispositif microfluidique selon la présente invention utilisant la structure d'électronébulisation de la figure 1,
- la figure 3 est une vue en perspective d'une autre structure d'électronébulisation utilisée par le dispositif microfluidique selon la présente invention,
- les figures 4A et 4B sont des vues respectivement de côté et de dessus, d'un dispositif microfluidique selon la présente invention utilisant la structure d'électronébulisation de la figure 3,
- la figure 5 est une vue en perspective d'encore une autre structure d'électronébulisation utilisée par le dispositif microfluidique selon la présente invention,
- la figure 6 est une vue de côté représentant la mise en place de la structure d'électronébulisation de la figure 5 sur une puce microfluidique adaptée pour obtenir un dispositif microfluidique selon l'invention,
- la figure 7 est une vue correspondant à la figure 6 où la structure d'électronébulisation est positionnée sur sa puce microfluidique,
- la figure 8 illustre une possibilité de connexion électrique d'un dispositif microfluidique selon l'invention avec le milieu extérieur,
- la figure 9 illustre une autre possibilité de connexion électrique d'un dispositif microfluidique selon l'invention avec le milieu extérieur,
- les figures 10A à 10E illustrent un mode de réalisation d'un nez d'électronébulisation utilisable dans le dispositif microfluidique selon l'invention.

### EXPOSÉ DÉTAILLÉ DE MODES DE RÉALISATION PARTICULIERS

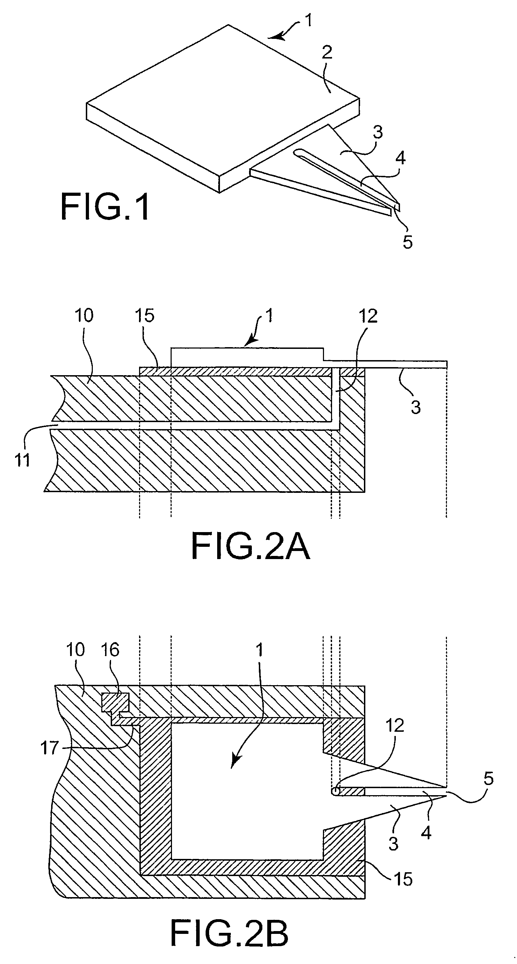

La figure 1 est une vue en perspective d'une structure (ou nez) d'électronébulisation 1 constituée par une plaque 2 prolongée, dans le plan de l'une de ses faces principales, par une pointe 3 pourvue d'une fente capillaire 4 pratiquée dans toute l'épaisseur de la pointe. La fente capillaire 4 aboutit à l'extrémité 5 de la pointe 3, destinée à former un orifice d'éjection pour un liquide à nébuliser.

Les figures 2A et 2B sont des vues, respectivement de côté et de dessus, d'un dispositif microfluidique utilisant le nez d'électronébulisation représenté à la figure 1.

Les figures 2A et 2B montrent un assemblage comprenant une puce microfluidique 10 et le nez d'électronébulisation 1. La puce microfluidique 10 comprend un canal microfluidique 11 débouchant par l'orifice de sortie 12 sur une zone de surface de la puce microfluidique. Le nez d'électronébulisation 1 est disposé sur cette zone de surface de façon que la pointe 3 soit en porte-à-faux par rapport à la puce microfluidique 10 et de façon que l'orifice de sortie 12 débouche sur la fente capillaire 4.

L'orifice de sortie 12 peut avoir un diamètre compris entre 10 et 100 µm.

Selon un premier mode d'assemblage, le nez d'électronébulisation 1 est collé à la puce microfluidique 10 à l'aide d'une colle électriquement conductrice 15.

Pour cela, la colle est étalée sur la face supérieure de la puce microfluidique par sérigraphie. Pour ne pas boucher l'orifice de sortie 12, il est indispensable de déposer la colle en couche mince. La sérigraphie de colle est une technique adaptée à cette contrainte puisqu'elle permet l'étalement de couches de colle très fines (de 1 à 10 µm) et homogène (voir la demande internationale WO-A-00/77509). Une fois la sérigraphie réalisée, le positionnement et l'alignement du nez d'électronébulisation 1 en regard de la puce microfluidique 10 sont assurés par un robot « pick and place » appelé PLAte-forme Technologique d'Intégration Micro-Optique (ou PLATIMO) développé par la société OPUS Optics and Micro Systems. Par des moyens optiques, le robot repère le trou de sortie de la puce microfluidique (Diamètre typique : de 10 à 100 µm), puis repère l'entrée du nez d'électronébulisation (typiquement de 1 à 10 µm), puis vient positionner les deux entités l'une contre l'autre, avec une précision micrométrique. Lors de cette opération, le nez d'électronébulisation est maintenu et déplacé à l'aide d'un bras à tête aspirante, tandis que la puce microfluidique est maintenu par un support adapté. L'assemblage est complètement terminé après la polymérisation de la colle conductrice.

Dans cet exemple de réalisation, la colle électriquement conductrice peut être la colle silicone TOFAY DA6524 fabriquée par DOWCORNING pour permettre d'imposer au liquide sortant du système un potentiel électrique de nébulisation. Comme illustré sur les figures 2A et 2B, une fois polymérisée, la colle 15 joue le rôle d'électrode et une reprise de contact 16 est déportée de la zone de sortie afin de permettre un accès électrique au monde extérieur. Cette reprise de contact 16 est elle-même en contact électrique avec l'électrode 15 (formée par la colle conductrice) par l'intermédiaire d'une piste électrique 17. L'ensemble « reprise de contact 16 / piste électrique 17 / électrode 15 » est réalisé en une seule opération de sérigraphie de colle conductrice à l'aide d'une « toile d'étalement ». Cette toile, dans un premier temps enduite de colle, est ensuite mise en contact avec la surface à encoller, puis dégagée, laissant une pellicule homogène de colle sur la surface d'intérêt. Commercialisées par des société comme DUBUIS ou KOENER, ces toiles de tissu polymères (polyesters) ou ces grilles de métal peuvent être livrées recouvertes de résine photosensible. Ainsi, par insolation et révélation, il est aisé de réaliser sur ce « pochoir », le complémentaire de l'ensemble « reprise de contact / piste électrique / électrode » pour que seule la zone souhaitée soit enduite de colle.

Le nez d'électronébulisation et la puce microfluidique sont au moins partiellement constitués de matériaux électriquement isolants de sorte qu'aucun courant électrique ne puisse circuler au sein de leur matière. Ainsi, seule la colle conductrice peut conduire le courant jusqu'au liquide se présentant à la sortie du canal microfluidique de la puce et à l'entrée du nez d'électronébulisation.

Selon un second mode d'assemblage, le nez d'électronébulisation est collé à la puce microfluidique à l'aide d'une colle classique comme la DELO-KATIOBOND 45952 fournie par SUPRATEC.

Cet assemblage s'opère de la même façon que dans la description précédente, mais ici le nez d'électronébulisation est obligatoirement laissé solidaire de son substrat de fabrication, substrat qui est choisi électriquement conducteur (métal, silicium dopé de type n ou de type p...) et qui permet d'assurer un contact électrique entre le monde extérieur et le liquide se présentant à l'entrée du nez d'électronébulisation. Pour cela, au cours de la réalisation du nez d'électronébulisation, on a pris soin de le munir d'un accès à une portion de substrat conducteur (électrode) pour le liquide sortant du canal de sortie de la puce.

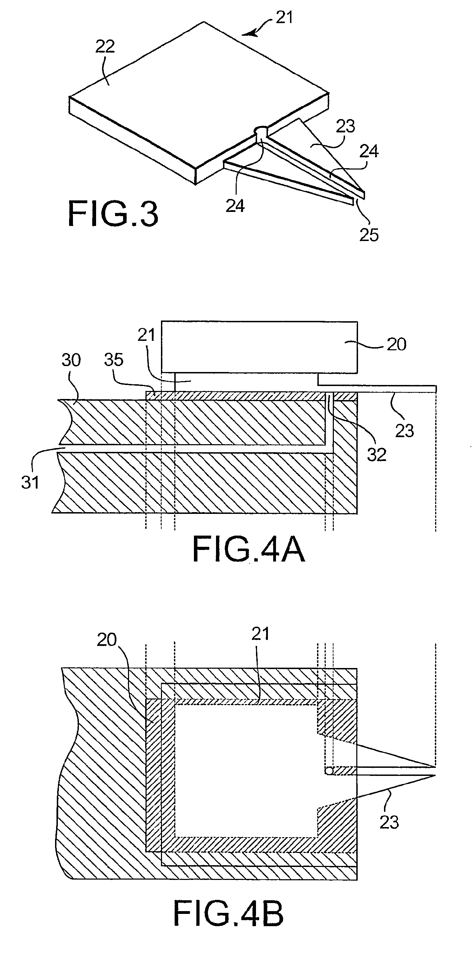

La figure 3 est une vue en perspective d'un nez d'électronébulisation 21 constitué par une plaque 22 prolongée, dans le plan de l'une de ses faces principales, par une pointe 23 pourvue d'une fente capillaire 24 pratiquée dans toute l'épaisseur de la pointe. La fente capillaire 24 aboutit à l'extrémité 25 de la pointe 23, destinée à former un orifice d'éjection pour un liquide à nébuliser. Le nez d'électronébulisation de la figure 3 est représenté sans son substrat de fabrication. L'accès à la portion de substrat conducteur est permis par la réalisation d'une rainure de contact 26 réalisée dans l'épaisseur du nez d'électronébulisation. Cette rainure, de section demi-circulaire ici, peut être choisie différemment suivant les cas, notamment de section rectangulaire. Dans tous les cas, on minimisera la longueur de cette rainure qui représente un volume mort pour le liquide. En se référant à la technologie décrite plus loin, cela revient à minimiser l'épaisseur de la couche sacrificielle (typiquement 200 nm), ce qui permet de limiter les volumes morts à des quantités négligeables.

Les figure 4A et 4B sont des vues, respectivement de côté et de dessus, d'un dispositif microfluidique utilisant le nez d'électronébulisation représenté à la figure 3.

Les figures 4A et 4B montrent un assemblage comprenant une puce microfluidique 30 et le nez d'électronébulisation 21 solidaire de son substrat de fabrication conducteur 20. La puce microfluidique 30 comprend un canal microfluidique 31 débouchant par l'orifice de sortie 32 sur une zone de surface de la puce microfluidique 21. Le nez d'électronébulisation 21 est disposé sur la puce microfluidique 30 comme pour les figure 2A et 2B. La référence 35 représente la couche de colle classique utilisée.

Selon un troisième mode d'assemblage, le nez d'électronébulisation est muni d'un pied lui permettant d'être inséré dans la puce microfluidique. La sortie de la puce est elle-même adaptée à l'insertion de ce pied, pour d'une part le guider, d'autre part minimiser les volumes morts. Le pied est lui-même traversé d'une rainure de contact et, comme précédemment, l'électrode est constituée par une portion de substrat conducteur solidaire du nez d'électronébulisation. L'ensemble est maintenu par une goutte de colle classique afin de conserver un bon positionnement.

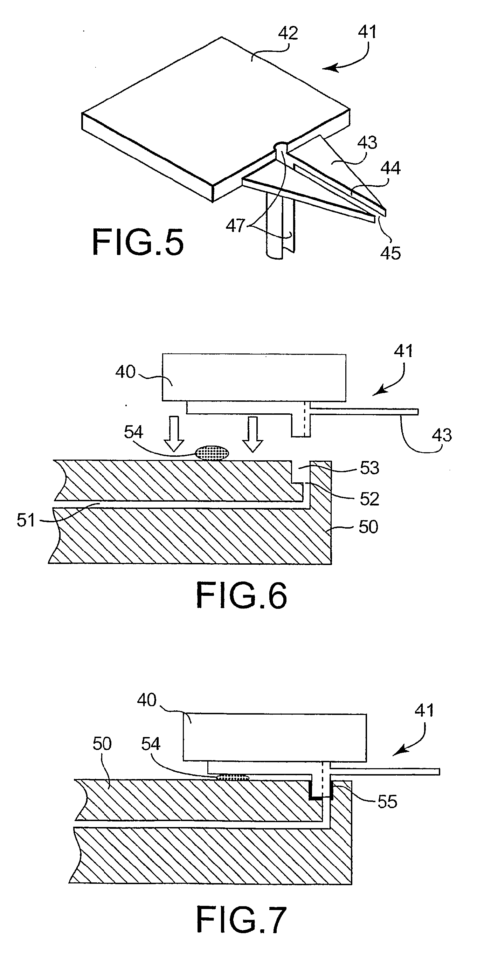

La figure 5 est une vue en perspective d'un nez d'électronébulisation 41 constitué par une plaque 42 prolongée, dans le plan de l'une de ses faces principales, par une pointe 43 pourvue d'une fente capillaire 44 pratiquée dans toute l'épaisseur de la pointe. La fente capillaire 44 aboutit à l'extrémité 45 de la pointe 43, destinée à former un orifice d'éjection pour le liquide à nébuliser. Le nez d'électronébulisation de la figure 5 est représenté sans son substrat de fabrication conducteur. La référence 46 désigne le pied de la structure d'électronébulisation et la référence 47 représente la rainure de contact qui permettra le passage du liquide à nébuliser.

La figure 6 illustre la mise en place de la structure d'électronébulisation de la figure 5 sur une puce microfluidique adaptée. Sur cette figure, le nez d'électronébulisation 41 est représenté avec son substrat de fabrication conducteur 40.

La puce microfluidique 50 comprend un canal microfluidique 51 débouchant par un orifice de sortie 52 au fond d'un logement 53 qui lui-même débouche sur la zone de surface de la puce destinée à recevoir le nez d'électronébulisation. Le logement 53 est prévu pour recevoir le pied 46 du nez d'électronébulisation. La rainure 47 est prévue pour assurer une communication de fluide entre l'orifice 52 et la fente capilaire 44.

Avant la mise en place du nez d'électronébulisation, une goutte de colle 54 est disposée sur la zone de surface de la puce microfluidique 50.

La figure 7 montre la structure d'électronébulisation 41 positionnée sur la puce microfluidique 50 et rendue solidaire de cette puce par la goutte de colle 54.

Selon les cas, notamment lorsque la pression attendue à l'intérieur du composant est forte (écoulement hydrodynamique), l'étanchéité doit être accrue par injection de colle entre le pied 46 et le logement 53. Pour cela, le simple dépôt d'une goutte de colle calibrée suffit. Elle pénètre à l'intérieur du composant par capillarité et s'arrête sur les angles vifs des entités (zones de fort mouillage). Cette étape n'est pas nécessaire lorsque la pression du liquide présent à l'intérieur du composant est faible, ce qui est le cas d'un écoulement électro-osmotique, toujours précédé d'un pré-remplissage.

Le dispositif microfluidique selon l'invention doit être connecté électriquement au milieu extérieur.

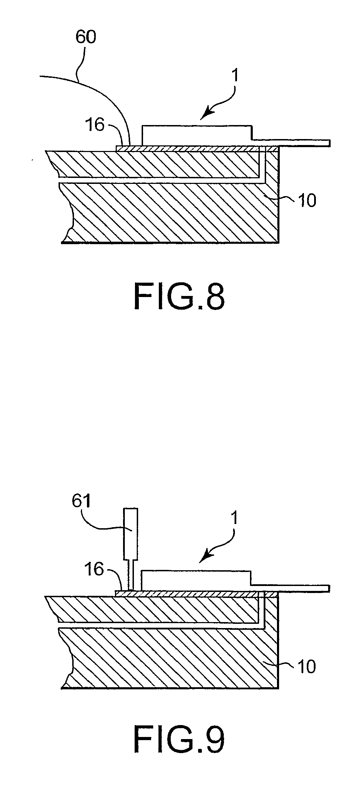

la figure 8 illustre une possibilité pour connecter électriquement le dispositif microfluidique représenté aux figures 2A et 2B au milieu extérieur. Le « wire bonding » est une possibilité classique pour le test des composants fabriqués en micro-technologie et en microélectronique. Un fil d'or 60 d'une centaine de micromètres, est soudé entre la reprise de contact 16 du dispositif et le circuit électrique qui constitue le support de la puce. Celui-ci, est lui même enfiché sur un circuit plus gros dans lequel peuvent s'insérer les câbles coaxiaux qui équipent les alimentations du commerce.

Un simple contact entre une pointe de test en or 61 et la reprise de contact 16 (ou, le cas échéant, le substrat conducteur) est une seconde solution pour assurer la connexion avec le milieu extérieur. Cette solution est illustrée par la figure 9. La connexion entre les alimentations du commerce et de telles aiguilles est aisée par simple soudure d'un câble électrique. Ces pointes de test, montées sur ressort et dont les têtes sont de l'ordre de quelques centaines de micromètres, sont commercialisées par exemple par la société FM Contact Technologies sous le nom de pointes de test Feinmetall.

La puce microfluidique peut être réalisée à partir de deux substrats de silicium ou de pyrex d'épaisseur 500 µm. Le réseau fluidique, dont le canal de sortie de la puce, peut être réalisé dans un premier substrat par gravure profonde (DRIE pour « Deep Reactive Ion Etching »), puis oxydé (isolation électrique de la puce). Le second substrat destiné à venir fermer le réseau fluidique du premier, peut lui aussi être gravé par DRIE (trou débouchant du canal de sortie) et oxydé thermiquement. Suivant l'épaisseur de la couche d'oxyde de silicium obtenue, l'assemblage des deux substrats est réalisé par scellement anodique (couche d'oxyde de silicium mince) ou par scellement direct (couche d'oxyde de silicium épaisse, typiquement 3 µm).

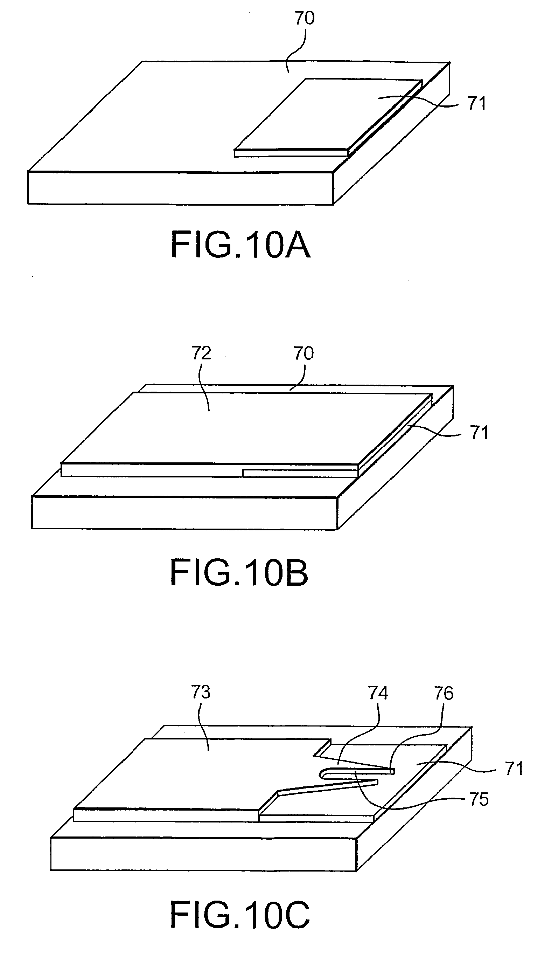

Le nez d'électronébulisation peut être réalisé à l'aide d'une résine épaisse comme la SU8 selon une filière technologique décrite par les figures 10A à 10E.

La figure 10A montre un substrat en silicium 70 recouvert partiellement d'une couche sacrificielle de nickel 71 de quelques centaines de nanomètres d'épaisseur. Cette couche sacrificielle 71 est nécessaire à la réalisation d'un surplomb, lui-même nécessaire à la découpe finale visant à libérer la pointe du nez d'électronébulisation.

Un dépôt 72 de résine SU 8, de quelques dizaines de micromètres d'épaisseur, est formé sur la structure représentée à la figure 10A comme le montre la figure 10B.

Le dépôt de résine est ensuite transformé, par insolation UV (quelque dizaines de mW/cm²) et révélation (gravure du SU 8), en une plaque 73 prolongée d'une pointe 74 reposant sur la couche sacrificielle 71. C'est ce que montre la figure 10C. La gravure permet également de réaliser une fente capilaire 75 dans la pointe 74, cette fente capilaire 75 aboutissant à l'extrémité 76 de la pointe.

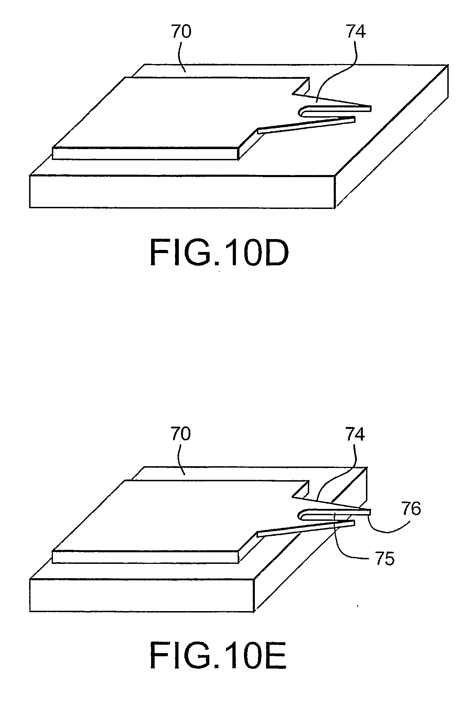

La figure 10D montre la structure obtenue après le retrait de la couche sacrificielle. La pointe 74 se trouve alors en surplomb par rapport au substrat 70.

Le substrat 70 est ensuite clivé de manière à libérer le nez d'électronébulisation. C'est ce que montre la figure 10E. Une partie de la pointe 74, une partie de la fente capillaire 75 et l'extrémité 76 de la pointe débordent du substrat 70.

L'invention est utilisable dans toutes les applications utilisant, comme méthode de détection, la spectrométrie de masse par ionisation par électronébulisation (ESI pour « ElectroSpray Ionisation »).

Elle est utilisable pour l'analyse d'échantillons dans le secteur biomédical et l'industrie pharmaceutique :
- analyses génétiques,
- protéomique (identification de protéines...),
- développement de médicaments.

## Revendications

1. Dispositif microfluidique comprenant une puce microfluidique (10, 30, 50) assemblée à une structure d'électronébulisation (1, 21, 41), la puce microfluidique comprenant au moins un canal microfluidique (11, 31, 51) débouchant par un orifice de sortie (12, 32, 52) sur une zone de surface de la puce microfluidique, la structure d'électronébulisation comprenant au moins une pointe pourvue d'un canal qui aboutit à l'extrémité (5, 25, 45) de la pointe pour former un orifice d'éjection d'un liquide à nébuliser, l'orifice de sortie du canal microfluidique débouchant sur le canal de la pointe, le dispositif microfluidique possédant également des moyens d'application d'une tension d'électronébulisation au liquide à nébuliser,
**caractérisé en ce que** que la pointe est une pointe plate et mince (3, 23, 43), le canal de la pointe étant constitué d'une fente capillaire (4, 24, 44), la structure d'électronébulisation étant disposée sur la zone de surface de la puce microfluidique de façon que ladite pointe soit en porte-à-faux par rapport à la puce microfluidique.

2. Dispositif microfluidique selon la revendication 1, **caractérisé en ce que** la puce microfluidique (10, 30, 50) est assemblée à la structure d'électronébulisation (1, 21, 41) par de la colle (15, 35, 54).

3. Dispositif microfluidique selon la revendication 2, **caractérisé en ce que** la colle étant électriquement conductrice, les moyens d'application d'une tension d'électronébulisation comprennent une couche de ladite colle (15) qui s'étend jusqu'à la fente capillaire (4), au niveau de l'orifice de sortie (12) du canal microfluidique (11) pour constituer une électrode d'électronébulisation.

4. Dispositif d'électronébulisation selon la revendication 3, **caractérisé en ce que** les moyens d'application d'une tension d'électronébulisation comprennent une reprise de contact (16) située sur la puce microfluidique (10), reliée électriquement à la couche de colle (15) et permettant une liaison électrique vers l'extérieur.

5. Dispositif d'électronébulisation selon l'une des revendications 1 ou 2, **caractérisé en ce que** la structure d'électronébulisation (21, 41) est solidaire d'un élément électriquement conducteur (20, 40) dont une partie est disposée en regard de la fente capillaire (24, 44), au niveau de l'orifice de sortie du canal microfluidique, pour constituer une électrode d'électronébulisation.

6. Dispositif d'électronébulisation selon la revendication 5, **caractérisé en ce que** la structure d'électronébulisation (21) possède une rainure de contact (26) formée transversalement dans ladite structure pour déboucher au niveau de l'orifice de sortie (32) du canal microfluidique (31) et exposer l'élément électriquement conducteur.

7. Dispositif d'électronébulisation selon l'une des revendications 5 ou 6, **caractérisé en ce que** l'élément électriquement conducteur (20, 40) est un élément constitutif d'un substrat de fabrication de la structure d'électronébulisation (21, 41).

8. Dispositif d'électronébulisation selon l'une des revendication 1 ou 2, **caractérisé en ce que** la structure d'électronébulisation (41) comprend un pied (46) adapté pour être reçu dans un logement (53) de la puce microfluidique (50).

9. Dispositif d'électronébulisation selon la revendication 8, **caractérisé en ce que** le pied (46) possède une rainure (47), le pied (46) et le logement (53) étant prévus pour que la rainure (47) serve de communication de fluide entre l'orifice de sortie (52) du canal microfluidique (51), situé au fond du logement, et la fente capillaire.

## Claims

1. Microfluidic device including a microfluidic chip (10, 30, 50) assembled to an electrospray structure (1, 21, 41), wherein the microfluidic chip includes at least one microfluidic channel (11, 31, 51) leading through an outlet aperture (12, 32, 52) to a surface area of the microfluidic chip, wherein the electrospray structure includes at least one point provided with a channel which terminates at the end (5, 25, 45) of the point so as to form an aperture for ejection of a liquid to be sprayed, wherein the outlet aperture of the microfluidic channel leads to the channel of the point, which microfluidic device also has means for applying an electrospray voltage to the liquid to be sprayed,
**characterised in that** the point is a thin, planar point (3, 23, 43), the channel of the point consisting in a capillary slot (4, 24, 44), the electrospray structure being arranged on the surface area of the microfluidic chip so that said point is cantilevered with respect to the microfluidic chip.

2. Microfluidic device according to claim 1, **characterised in that** the microfluidic chip (10, 30, 50) is assembled to the electrospray structure (1, 21, 41) by adhesive (15, 35, 54).

3. Microfluidic device according to claim 2, **characterised in that,** as the adhesive is electrically conductive, the means for applying an electrospray voltage include a layer of said adhesive (15) which extends to the capillary slot (4), at the level of the outlet aperture (12) of the microfluidic channel (11) so as to form an electrospray electrode.

4. Electrospray device according to claim 3, **characterised in that** the means for applying an electrospray voltage include a contact element (16) located on the microfluidic chip (10), electrically connected to the adhesive layer (15) and allowing for an external electrical connection.

5. Electrospray device according to one of claims 1 or 2, **characterised in that** the electrospray structure (21, 41) is secured to an electrically conductive element (20, 40) of which a portion is arranged opposite the capillary slot (24, 44), at the level of the outlet aperture of the microfluidic channel, so as to form an electrospray electrode.

6. Electrospray device according to claim 5, **characterised in that** the electrospray structure (21) has a contact groove (26) formed transversally in said structure so as to open out at the level of the outlet aperture (32) of the microfluidic channel (31) and expose the electrically conductive element.

7. Electrospray device according to one of claims 5 or 6, **characterised in that** the electrically conductive element (20, 40) is an element constituting a substrate for producing the electrospray structure (21, 41).

8. Electrospray device according to one of claims 1 or 2, **characterised in that** the electrospray structure (41) includes a leg (46) suitable for being received in a recess (53) of the microfluidic chip (50).

9. Electrospray device according to claim 8, **characterised in that** the leg (46) has a groove (47), and the leg (46) and the recess (53) are arranged so that the groove (47) ensures the communication of fluid between the outlet aperture (52) of the microfluidic channel (51), located at the base of the recess, and the capillary slot.

## Patentansprüche

1. Mikrofluidische Vorrichtung mit einem mit einer Elektrozerstäubungsstruktur (1, 21, 41) zusammengebauten Mikrofluidik-Chip (10, 30, 50), wobei der Mikrofluidik-Chip wenigstens einen durch eine Ausgangsöffnung (12, 32, 52) in einer Oberflächenzone des Mikrofluidik-Chips mündenden Mikrofluidik-Kanal (11, 31, 51) umfasst, die Elektrozerstäubungsstruktur wenigstens eine Spitze aufweist, die einen Kanal umfasst, der am Ende (5, 25, 45) der Spitze mündet, um eine Spritzöffnung einer zu zerstäubenden Flüssigkeit zu bilden, die Ausgangsöffnung des Mikrofluidik-Kanals in den Kanal der Spitze mündet, die mikrofluidische Vorrichtung auch Einrichtungen zur Anwendung einer Elektrozerstäubungsspannung auf die zu zerstäubende Flüssigkeit besitzt,
**dadurch gekennzeichnet, dass** die Spitze eine flache und dünne Spitze ist (3, 23, 43), der Kanal der Spitze durch einen Kapillarschlitz (4, 24, 44) gebildet wird, die Elektrozerstäubungsstruktur so auf der Oberflächenzone des Mikrofluidik-Chips angeordnet ist, dass die genannte Spitze in Bezug auf den Mikrofluidik-Chip frei vorsteht.

2. Mikrofluidische Vorrichtung nach Anspruch 1, **dadurch gekennzeichnet, dass** der Mikrofluidik-Chip (10, 30, 50) mittels Klebstoff (15, 35, 54) mit der Elektrozerstäubungsstruktur (1, 21, 41) zusammengebaut ist.

3. Mikrofluidische Vorrichtung nach Anspruch 2, **dadurch gekennzeichnet, dass** der Klebstoff elektrisch leitfähig ist, die Einrichtungen zur Anwendung einer Elektrozerstäubungsspannung eine Schicht des genannten Klebstoffs (15) umfassen, die sich in Höhe der Ausgangsöffnung (12) des Mikrofluidik-Kanals (11) bis zu dem Kapillarschlitz (4) erstreckt, um eine Elektrozerstäubungselektrode zu bilden.

4. Elektrozerstäubungsvorrichtung nach Anspruch 3, **dadurch gekennzeichnet, dass** die Einrichtungen zur Anwendung einer Elektrozerstäubung eine auf dem Mikrofluidik-Chip (10) sitzende Kontaktaufnahmeeinrichtung (16) umfassen, die elektrisch mit der Klebstoffschicht (15) verbunden ist und eine elektrische Verbindung nach außen ermöglicht.

5. Elektrozerstäubungsvorrichtung nach einem der Ansprüche 1 oder 2, **dadurch gekennzeichnet, dass** die Elektrozerstäubungsstruktur (21, 41) fest mit einem elektrisch leitfähigen Element (20, 40) verbunden ist, von dem ein Teil dem Kapillarschlitz (24, 44) gegenübersteht, in Höhe der Ausgangsöffnung des Mikrofluidik-Kanals, um eine Elektrozerstäubungselektrode zu bilden.

6. Elektrozerstäubungsvorrichtung nach Anspruch 5, **dadurch gekennzeichnet, dass** die Elektrozerstäubungsstruktur eine Kontaktrinne (21) umfasst, transversal ausgebildet in der Struktur, um in Höhe der Ausgangsöffnung (32) des Mikrofluidik-Kanals (31) zu münden und das elektrisch leitfähige Element zu exponieren.

7. Elektrozerstäubungsvorrichtung nach einem der Ansprüche 5 oder 6, **dadurch gekennzeichnet, dass** das elektrisch leitfähige Element (20, 40) ein konstitutives Element eines Substrats zur Herstellung der Elektrozerstäubungsstruktur (21, 41) ist.

8. Elektrozerstäubungsvorrichtung nach einem der Ansprüche 1 oder 2, **dadurch gekennzeichnet, dass** die Elektrozerstäubungsstruktur (41) einen Fuß (46) umfasst, angepasst zur Aufnahme in einem Sitz (53) des Mikrofluidik-Chips (50).

9. Elektrozerstäubungsvorrichtung nach Anspruch 8, **dadurch gekenntzeichnet, dass** der Fuß (46) eine Rinne (47) umfasst, der Fuß (46) und der Sitz (53) vorgesehen sind, damit die Rinne (47) der Fluidverbindung zwischen der Ausgangsöffnung (52) des am Boden des Sitzes befindlichen Mikrofluidik-Kanals (51) und dem Kapillarschlitz dient.
